# EUROPEAN PATENT SPECIFICATION

(11) **EP 2 997 253 B1**
(45) Date of publication and mention of the grant of the patent: **16.08.2017**
(21) Application number: 14715395.1
(22) Date of filing: 14.03.2014
(51) Int. Cl.: F03B 13/26, F03B 13/06, F03D 9/14

(54) **TIDAL POWER GENERATION AND STORAGE**
GEZEITENSTROMERZEUGUNG UND -SPEICHERUNG
SYSTÈME DE GÉNÉRATION ET DE STOCKAGE D'ÉNERGIE MARÉMOTRICE

(30) Priority: 15.03.2013 GB 201304756
(43) Date of publication of application: 23.03.2016
(73) Proprietor: Renewable Hydrocarbons Ltd, Lancaster, Lancashire LA2 6ND (GB)
(72) Inventor: HAIGH, Peter, Lancaster Lancashire LA2 6ND (GB)
(74) Representative: Hutchinson, Thomas Owen
(86) International application number: PCT/GB2014/050809
(87) International publication number: WO 2014/140629

(56) References cited:
- WO-A2-2012/053988
- DE-C- 802 568
- GB-A- 487 850
- TW-B- 500 873
- US-A1- 2012 019 004

## Description

This invention relates to power generation and storage using renewable energy sources, in particular, but without limitation, to tidal and wind power.

A growing need exists for power from renewable energy sources to supplement and/or replace fossil fuel- and nuclear power-based power generation infrastructure as it exists at present. Renewable energy sources that have been effectively captured include solar, wind, tidal and hydroelectric power sources, in addition to ground sourced heat and so on. The problem with most forms of renewable energy is a lack of reliability, that is to say, the sun doesn't always shine, the wind doesn't always blow, tidal ranges are cyclical, and hydroelectric power ultimately depends on rainfall, which fluctuates. As such, it is not usually possible to generate power using renewable energy sources when demand for power is highest, and there are often periods of abundant power from renewable sources when demand for power is low. As such, renewable power generation has always been viewed as a supplementary power source to fossil- and nuclear-fuelled power stations, rather than as a primary power source.

A need therefore exists for a renewable energy power generation system that is able to cope with variations in supply and demand for energy. One way to smooth out the variations in supply and demand is to build complex power generation and distribution networks that can shunt power from where it can be generated at any point in time, to where it is needed. Such systems include the UK's "National Grid", which is a system of interconnected power stations and distribution systems that allow power stations to be turned on and off to cope with variations in power demand. However, large-scale power distribution networks suffer from high levels of complexity, costly infrastructure requirements and significant power transmission losses, thus detracting from their efficacy and economic attractiveness. Repeatedly turning power stations on and off greatly shortens their operational life due to thermal cycling issues: having been designed for continuous use. At the same time, repairing existing power stations and commissioning new ones is so expensive nowadays as to render them uneconomic at current prices.

An alternative solution is to use smaller power distribution networks that comprise power storage devices, which allow power stations to operate full-time: the power storage devices accumulating excess power during periods of low demand and enabling shortfalls in power supply to be topped up by stored power in the power storage device. Nevertheless, the location of power generation and storage facilities at different locations can be impractical and can introduce power transmission losses. Power storage devices are known in many forms, such as water pumping, thermal storage, compressed gas power storage etc. as will be well-known to persons skilled in the art.

Of all the renewable energy sources, the most "reliable" source is probably tidal power. However, tides ebb and flow twice daily, meaning that the tidal flow varies approximately sinusoidally over the course of each day in addition to the fact that the tidal range varies over the lunar cycle between spring and neap tidal ranges. As such, even though tides are guaranteed to occur, it is not always possible to match tidal power generation capacity with power demand. Accordingly, most tidal power generators are coupled, often locally, to power storage devices, such as water pumping stations, that "use up" excess power to raise water that can be passed through a power generation turbine at a later time to compensate for power generation deficits.

Most existing tidal power generators rely on tidal flow, that is the passage of water into and out of, say, an estuary, and their turbines and generators are driven directly by the flow of sea water. Such a configuration necessarily means that power generation capacity is intrinsically linked to the tidal patterns, which is undesirable for reasons previously stated.

A known solution to this problem is to use the tidal range, that is to say, the rise and fall of the sea level, rather than tidal flows, to fill and empty water storage tanks, which can be filled and emptied via turbine-containing sluices or conduits. Such a configuration allows the tidal range to be "captured" thereby the flow of sea water from a high level tank to a low-level tank to be controlled at will. Such a configuration overcomes the issue of the tides not coinciding with power demand, and examples of such systems are described, for example, in the following published patent specifications: US2012274070A, US2012248777A, GB2488158A, CN102619791A, GB2482682A, KR20100112231A, CN201794062U, WO08084560A, WO09111861A1, WO09062362A, KR20070099712A, TW500873B, BE903837A, US4288985A, DE3128919A, DE3107138A and US4310769A.

All of the above documents describe systems in which there are two tanks that are filled or emptied at high and low tides, which overcome some of the problems identified above, but which do not allow for continuous power generation or power storage.

This invention proposes to use a third tank to act as a store for water to ensure that a suitable working head can be maintained at all times. US2012019004 is an example of a tidal power generation system that has three reservoirs, but in this case, the third tank is used to "break" the head allowing water to be pumped higher and/or without back-siphoning. Another example is disclosed in GB487850A. On the other hand, Chinese patent application, CN20177894 has three interconnected tanks, namely a "high tank", "a low tank" and a "zero" tank. This system uses varying sea levels to fill the high or zero tank, and water can be allowed to flow between the high tank to the low tank via a turbine to generate power. The third tank of CN20177894 is filled by a pump that powered by turbines located in the inlet and outlet sluices of the high and low tanks, and when power demand exceed available power capacity, the zero tank can be used to top-up the high tank. This known system fails to capitalise on other potentially available renewable energy sources, and remains reliant to tidal flows, rather than tide levels, to generate power.

The present invention aims to address one or more of the shortcomings of known tidal power generation systems, and/or to provide an improved and/or alternative tidal power generation system.

According to a first aspect of the invention, there is provided a tidal power generation and storage system comprising three tanks located in a tidal sea, a first and second one of the tanks each comprising a selectively openable and closeable sea aperture in fluid communication with the sea, the system being configured such that: the first tank's sea aperture is openable on flood tide to fill the first tank with seawater to a level corresponding substantially to a high tide level; and the second tank's sea aperture is openable on an ebb tide to substantially empty the second tank of seawater to a level corresponding with a low tide level, the system being characterised by: a first fluid passageway extending between the first tank and the second tank, the first fluid passageway comprising a first turbine-generator assembly configured to generate a first power as water flows from the first tank to the second tank, the first power being used to drive a pump for pumping water from the first tank to the third tank, and further comprising; a second fluid passageway extending between the third tank and the second tank, the second fluid passageway comprising a flow control means and a second turbine-generator assembly configured to generate a second output power as water flows from the third tank to the second tank, the second output power being controllable by actuation of the flow control means.

According to the first aspect of the invention, the water level in the third tank is suitably maintained at a higher level than the water in the first tank, and the water level in the first tank is suitably maintained at a higher level than the water in the second tank.

According to a second aspect of the invention, there is provided a tidal power generation and storage system comprising three tanks located in a tidal sea, a first and second one of the tanks each comprising a selectively openable and closeable sea aperture in fluid communication with the sea, the system being configured such that: the first tank's sea aperture is openable on a flood tide to substantially fill the first tank with seawater to a level corresponding to a high tide level; and the second tank's sea aperture is openable on an ebb tide to substantially empty the second tank of seawater to a level corresponding with a low tide level, the system being characterised by: a first fluid passageway extending between the first tank and the second tank, the first fluid passageway comprising a first turbine-generator assembly configured to generate a first power as water flows from the first tank to the second tank, the first power being used to drive a pump for pumping water from the third tank to the second tank, and further comprising; a second fluid passageway extending between the first tank and the third tank, the second fluid passageway comprising a flow control means and a second turbine-generator assembly configured to generate a second output power as water flows from the first tank to the third tank, the second output power being controllable by actuation of the flow control means.

According to the second aspect of the invention, the water level in the first tank is suitably maintained at a higher level than the water in the second tank, and the water level in the second tank is suitably maintained at a higher level than the water in the third tank.

The invention thereby provides a tidal power generation system that captures water in tanks at two different levels, namely the high tide sea level in the first tank and the low tide sea level in the second tank to maintain a head between the first and second tanks. The difference in the water levels in the first and second tanks can thus be used to continuously drive the first turbine-generator assembly for pumping water to or from the third tank. By so doing, a second head can be maintained between either: the third tank and the second tank; or between the first tank and the third tank, which second head can be used, via the second turbine-generator assembly, to selectively generate useful output power when required.

By the cyclical re-filling of the first tank at high tide and the emptying of the second tank at low tide, the first head can be maintained indefinitely. To ensure that the first head does not reduce to zero, one can suitably restrict the flow of water from the first tank to the second tank and/or ensure that the volumes of water are relatively large. This latter criteria is suitably met by using tanks with large cross-sectional areas such that there is a large difference in the volumes of water in the first and second tanks, even where the differences in their respective levels is low. Suitably, the cross-section areas of the tanks may be of the order of hundreds or thousands of square metres, or even square kilometres.

By using the flow of water from the first tank to the second tank solely to pump water to or from the third tank, the available head for generating output power, that is to say, the head between the third tank and the second tank, or the head between the first tank and the third tank is independent of the instantaneous tide level. Also, such a configuration suitably enables the flow of water from the first tank to the second tank to be "stored" as a head between the third tank and the second tank, or the head between the first tank and the third tank, to enable power to be generated at will.

Suitably, supplementary renewable energy sources, for example, wind and/or solar power, may be used to drive a third pump which tops-up the level of water in third tank (according to the first aspect of the invention), or reduces the level of water in the third tank (according to the second aspect of the invention). Where wind power is used as a supplementary power source, an output of a wind turbine could be directly and/or mechanically linked to a pump such that losses are not incurred in the conversion of wind power to electrical power and back into mechanical effort in the pump's motor.

Notably, the invention obeys the laws of physics because it converts the potential energy of water stored at a high tide level into mechanical/electrical energy by allowing it to flow to a low tide level. There is always a net energy input, that is to say, the work done by gravity to raise/lower the tides: thus, the invention merely captures this work and converts it into useful output power in a time-delayed fashion.

Preferred embodiments of the invention shall now be described, by way of example only, with reference to the accompanying drawings in which:
Figures 1 to 4 are a series of schematic cross-sections showing the operation of the first aspect of the invention at different stages of a single tidal cycle;
Figures 5 to 8 are a series of schematic cross-sections showing the operation of the second aspect of the invention at different stages of a single tidal cycle; and
Figure 9 is a schematic, partially cut-away view of a power generation and storage system in accordance with the invention.

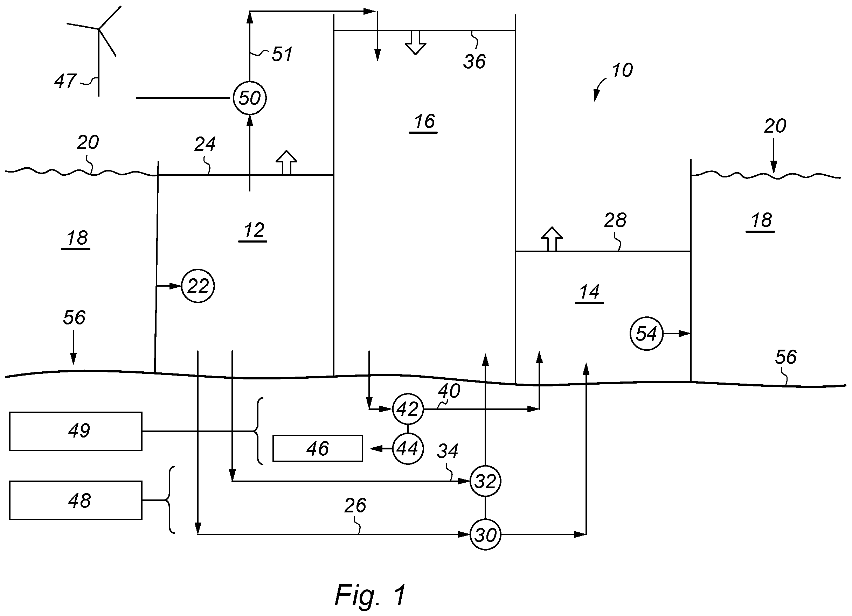

In Figures 1 to 4, a first embodiment of a power generation and storage system 10 according to the invention comprises first 12, second 14 and third 16 tanks that are placed in a tidal sea 18, the level 20 of which rises and falls in accordance with the tides. In Figure 1, the sea level 20 is at high tide and a sluice gate 22 is open in the first tank 12 (the "high" tank) to allow sea water 18 in to fill the first tank to a level 24 corresponding to that of the high tide sea level 20.

A first fluid conduit 26 interconnects the first 12 and second 14 tanks allowing sea water to flow from the first tank 12 into the second tank 14, the level 28 of sea water in which is lower than that 24 of the first tank 12. The flow of water in the first fluid conduit 26 is used to drive a turbine 30, which powers a pump 32, which pumps sea water from the first tank 12 into the third tank 16 via a second fluid conduit 34, thus maintaining the level 36 of water in the third tank 16 at a higher level than that 24 of the first tank 12 and that 28 of the second tank 14.

A third fluid conduit 40 interconnects third tank 16 and the second tank 14, and a second turbine 42 is placed in the third fluid conduit 40, which drives a generator 44 providing output power to a power distribution network 46, such as the UK's "National Grid".

It will be seen that the primary input energy 48 comes from the difference in the water levels 24, 28 between the first 12 and second 14 tanks, which is, of course provided by changes in the sea level 20. Likewise, output power 49 from the system 10 is derived from the difference in the water levels 36-28 between the third 16 and second 14 tanks, respectively. By maintaining these differences in water levels, useful output power can be generated continuously.

The level of water 36 in the third tank 16 can be topped-up by a supplementary renewable energy sources, in the illustrated embodiment, a wind turbine 47 configured to drive a pump 50 for pumping water from the first tank 12 into the third tank 16. The use of an additional power input enables the available head 36-28 for generating output power to be topped-up, although it will be appreciated that this is not necessary if the flow of water between the tanks is controlled to prevent the head 36-28 from falling to zero. However, the use of a supplementary input energy source 48 can help to delay the fall off in the working head 36-28 and increase the power output.

It will be appreciated that as water flows through conduits 34 and 26, the level 24 of water in the first tank 12 will fall, thereby increasing the level 28 of water in the second tank 14, thus reducing the working head 36-28 of the system 10 for generating output power 49. This effect is alleviated by topping-up the level of water in the third tank 36 via conduit 34. Nevertheless, unless something is done, the system 10 will eventually "equalise", that is to say, all three tank water levels 24, 36, 28 will equalise, bringing the system to rest.

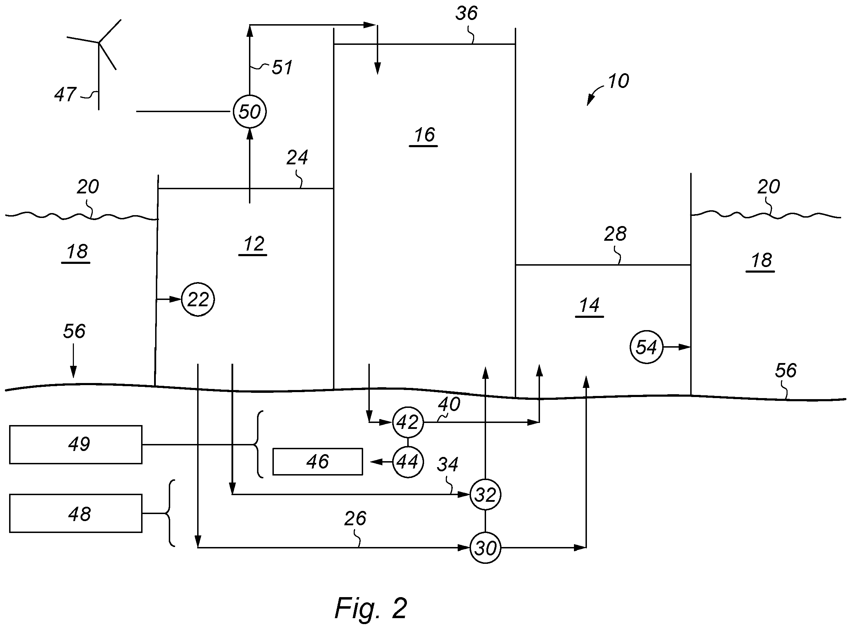

Fortunately, however, the sea level 20 is continuously rising and falling, as is shown in Figures 2 to 4 of the drawings, which effect can be used to prevent the system 10 from stalling.

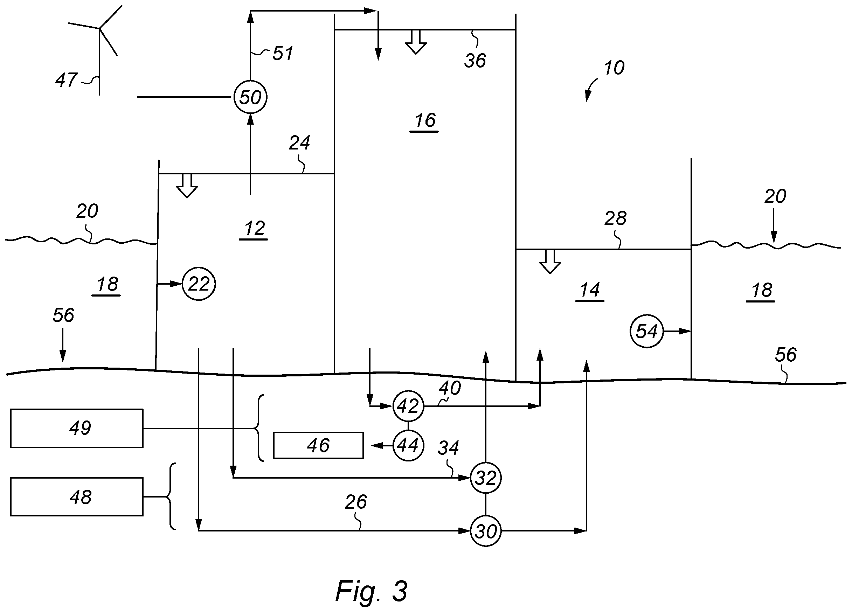

In Figure 2, which shows the system 10 at an ebbing mid tide, the sea level 20 has fallen and now lies at a level 20 below its high tide level, which has been substantially "preserved" 24 in the first tank 12 by closing the valve 22 thus preventing the sea level 20 from equalising with the water level 24 in the first tank. The system is allowed to operate as described in relation to Figure 1 above, until low tide, as shown in Figure 3.

In Figure 3, the sea level 20 is at its lowest level for that tidal cycle, and a valve 54 is open in the second tank allowing the water in the second tank 14 to drain to the sea 18, thus equalising its level 28 with that of the low tide sea level 20. The draining of the second tank 14 empties the "excess" water that has accumulated in the second tank 14 as a result of water flow in conduits 40 and 26 during the preceding part of the tidal cycle, thereby "resetting" the system 10.

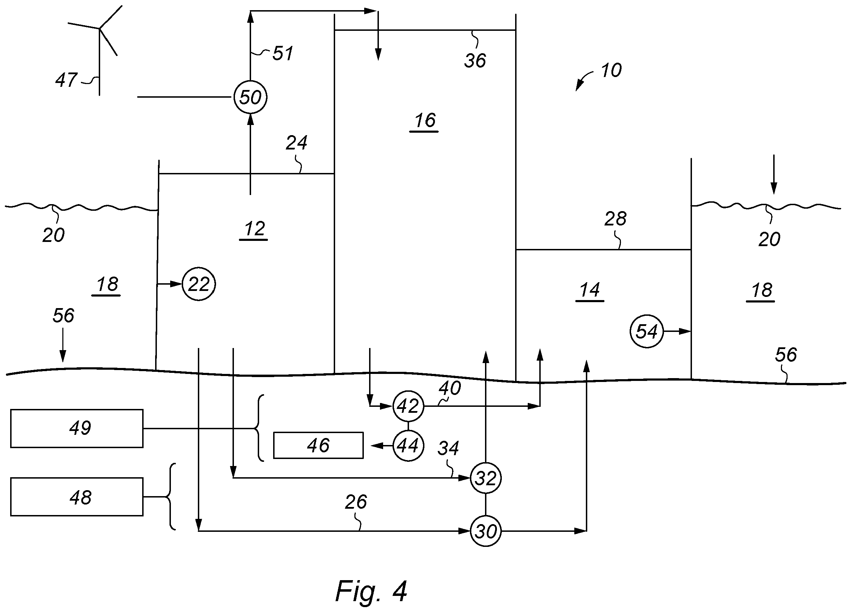

In Figure 4, which shows the system at a flooding mid tide, the sea level 20 is rising again, whilst the water level in the first tank 12 is still falling. The system still continues to operate as described in relation to Figure 1. However, at the next flood, as shown in Figure 1, valve 22 can be re-opened to top-up the now depleted water level 24 in the first tank 12 allowing the cycle to continue.

It will be appreciated that the foregoing cycle has the potential to be repeated indefinitely, provided the water levels 24, 28, 36 in the three tanks 12, 14, 16 are maintained at appropriate levels by controlling the operation of the valves 22, 54 and the flow of water in conduits 26, 34, 40. In fact, the flow of water in output power generation conduit 40 is controllable at will, in accordance with instantaneous power demands.

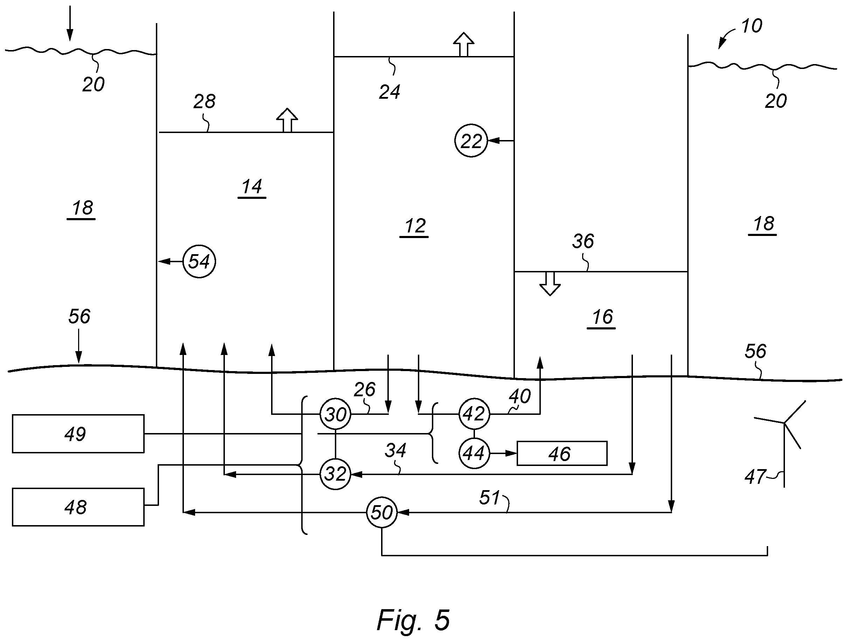

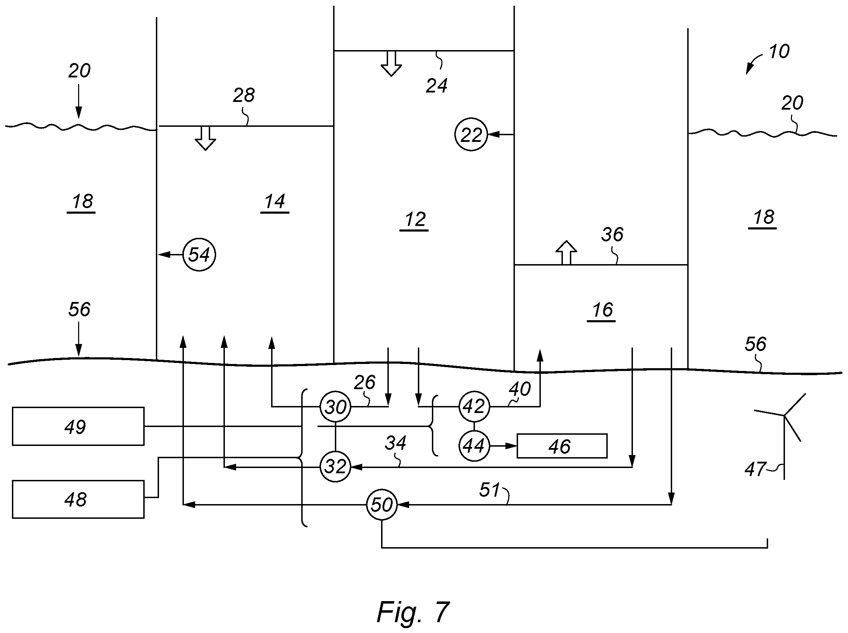

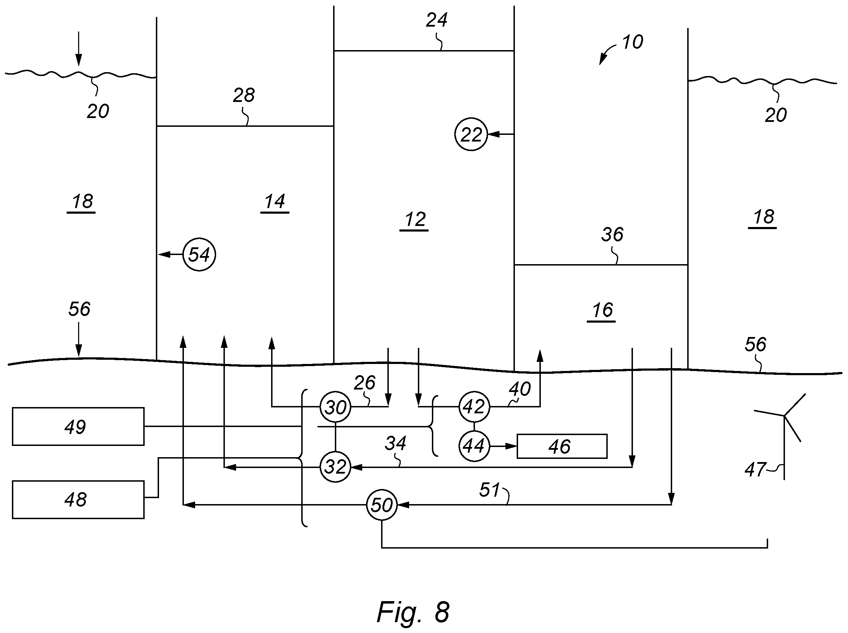

The system described above is particularly suitable for use in relatively shallow tidal waters, that is to say, with the sea level being between 5 and 20 metres above the sea bed 56. However, in deeper seas, a slightly different configuration may be needed, as shown in Figures 5 to 8 of the drawings.

In Figures 5 to 8, identical reference signs have been used to identify identical features to those described in relation to Figures 1 to 4 to aid understanding and to avoid repetition.

In Figure 5 to 8 it will be seen that a similar three-tank system is used as described previously, with the first 12 and second 14 tanks each having valves 22, 54 that can be opened on a flood tide and on an ebb tide, respectively to maintain the water levels 24, 28 in each tank at the requisite "reducing high tide" and "rising low tide" levels previously described. Thus the system can be operated and reset in precisely the same way as described above, that is to say, with a first fluid conduit 26 allowing water to flow from the first tank 12 to the second tank 14 via a turbine 30 to drive a pump 32 for reducing the level in the third tank 16 and pumping seawater to the second tank 14 via the second fluid conduit 34. This pumping action maintains the level 24 of water in the first tank 12 at a higher level than the water level 36 in the third tank 16: the difference in the water levels 24-36 being used to drive an output power generator 44 via an in-line turbine 42 to provide output power 49, at will, to a power distribution network 46. A supplementary power input device 47 is also used to help lower the water level 36 in the third tank 16 by pumping water to the second tank 14 thus helping to maintain the output power 49 generation head 24-36 at a desired level.

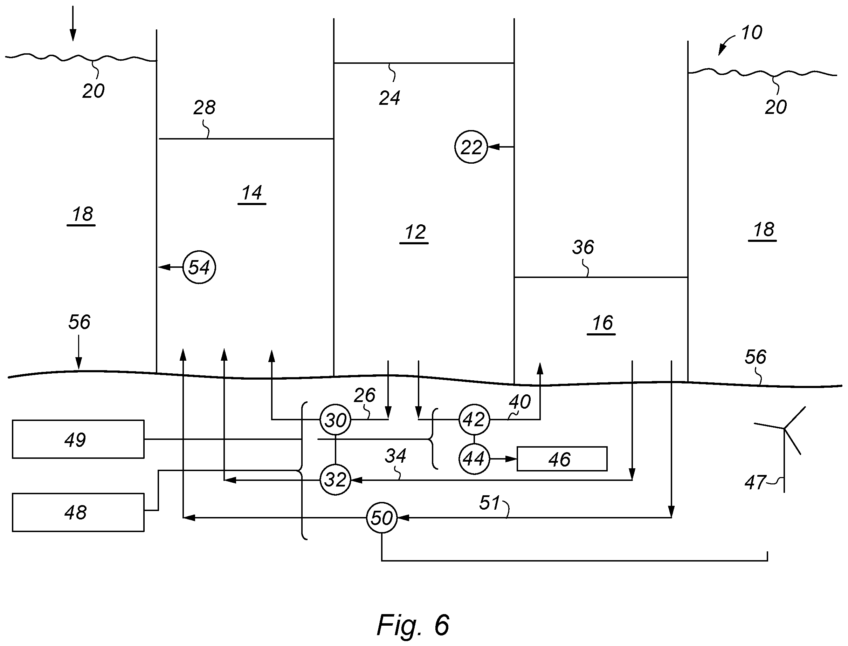

Figures 6 to 8 show the system 10 at ebbing mid flow, low tide and flooding mid tide, sea levels, respectively, and it will be seen that in all cases, the system operates continuously as described above in relation to Figure 5. On the ebb tide, valve 54 can be opened to equalise the level 28 of water in the second tank 14 with that of the low tide sea level 20, thereby draining the "excess" water accumulated in the second tank 14 by water flowing into it via conduits 26, 34 and 51. Similarly, on the flood tide, valve 22 can be opened to allow the water level 24 in the first tank 12 to equalise with the high tide sea level 20, thereby re-filling the highest tank of the system 10 allowing the process to continue.

The embodiment shown in Figure 5 to 8 allows for output power 49 to be generated at will. If output power demand decreases, turbine 42 can be slowed or stopped, whereby power from turbine-generator assembly 30-32 is used to drain the third tank 16 to maintain the head 24-36 so that the output power generator 42-44 can be switched on again at will.

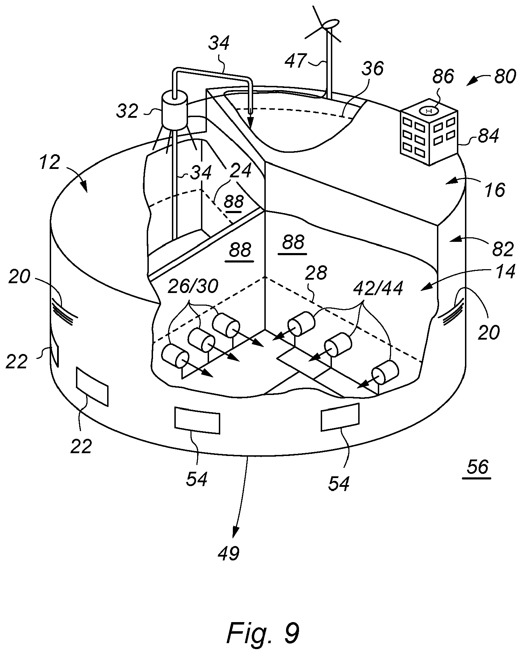

It will be readily appreciated that the invention enables tidal levels, rather than direct tidal flows to be harnessed for the generation and storage of power. To achieve this end on a useful scale, the tanks 12, 14, 16 need to have large surface areas to make their levels proportionately more dependent on the high and low sea levels 20 than on the flow rates in the various conduits (that is to say that large volumes of water can flow within the conduits without greatly affecting the water levels within the tanks). An exemplary system in the form of an offshore power generation and storage plant 80, in accordance with the embodiment of Figures 1 to 4 is shown in Figure 9.

In Figure 9, a large-scale offshore power generation and storage facility 80 comprises a generally cylindrical main body portion 82 manufactured from concrete sea walls defining an "island" in the tidal sea 18. The sea level 20 rises and falls in accordance with the tides, and the exterior of the facility 80 can be used for various purposes, such as the siting of a wind farm comprising a number of wind turbines 47, accommodation units 84, a heliport or docking facility 86 to allow operatives to visit, and work on, the facility 80. Remaining space on the facility 80 could be used for storage, offshore warehousing, as a shipping oil depot or for various other purposes.

The main body 82 is divided internally, by three dividing walls 88 to form the first 12, second 14 and third 16 tanks of the invention, which are all filled with sea water 18 up to their respective levels 24, 28, 36. The aforedescribed conduits and turbines 26, 30 and 40, 42 are located in the dividing walls 88 to allow sea water to flow between the chambers or tanks, as previously described. Openable and closeable sluice gates 22, 54 are provided on the external sea walls 82 of the facility to allow the first tank 12 to be filled to sea level 20 at high tide, and for the second tank 14 to be drained at low tide to sea level 20. The operation of the facility 80 as shown in Figure 9 is precisely as described above in relation to Figures 1 to 4.

It will be appreciated that the size of the facility 80, which is not drawn to scale in Figure 9, could be as large or small, as necessary: the larger the better, but ultimately, the maximum size of the facility will be determined by engineering, environmental, cost and/or political constraints. Nevertheless, it will be appreciated that the facility 80 could serve purposes in addition to power generation and storage, for example, as an offshore port and/or storage facility, as a recreational venue and so on. It will also be appreciated that the number of working parts is greatly reduced compared, say, to that of a conventional power station, and owing to the size of the facility 80, servicing, maintenance and repair is much easier than, say for existing offshore wind farms, which can only be accessed by boat. In the case of the embodiment of the invention shown in Figure 9, which is essentially, a large, fixed, manmade "island", it is possible to house and accommodate crew and staff onsite for extended periods of time, which addresses many of the personnel health and safety issues associated with existing offshore facilities.

## Claims

1. A tidal power generation and storage system (10) comprising three tanks (12, 14, 16) located in a tidal sea (18), a first pair of the tanks (12, 14) each comprising a selectively openable and closeable sea aperture (22, 45) in fluid communication with the sea (18), the system (10) being configured such that: a first one of the first pair's tank's sea aperture (22) is openable on a flood tide to fill it with seawater to a level (24) corresponding substantially to a high tide level (20); and a second one of the first pair's tank's sea aperture (54) is openable on an ebb tide to substantially empty it of seawater to a level corresponding with a low tide level (20), the system (10) being **characterised by**: a first fluid passageway (26) extending between the first pair of tanks (12, 14), the first fluid passageway (26) comprising a first turbine-generator assembly (30) configured to generate a first power as water flows between the tanks of the first pair of tanks (12, 14), the first power being used to drive a pump (32) for pumping water between a second pair (12, 16) of the three tanks via a second fluid passageway (34), the second pair (12, 16) being a different pair of tanks than the first pair of tanks (12,14); a third fluid passageway (40) extending between a third pair of tanks (16, 14), the third pair being (16,14) a different pair of tanks than the first two pairs of tanks (12,14; 12, 16), the third fluid passageway (40) comprising a flow control means and a second turbine-generator assembly (42) configured to generate a second output power (49) as water flows between the third pair of tanks (16, 14), the second output power (49) being controllable by actuation of the flow control means.

2. A tidal power generation and storage system (10) as claimed in claim 1, comprising three tanks (12, 14, 16) located in a tidal sea (18), a first (12) and second (14) one of the tanks each comprising a selectively openable and closeable sea aperture (22, 54) in fluid communication with the sea (18), the system (10) being configured such that: the first tank's sea aperture (22) is openable on flood tide to fill the first tank (12) with seawater to a level corresponding substantially to a high tide level (20); and the second tank's sea aperture (54) is openable on an ebb tide to substantially empty the second tank (14) of seawater to a level corresponding with a low tide level (20), the system (10) being **characterised by**: a first fluid passageway (26) extending between the first tank (12) and the second tank (14), the first fluid passageway (26) comprising a first turbine-generator assembly (30) configured to generate a first power as water flows from the first tank (12) to the second tank (14), the first power being used to drive a pump (32) for pumping water from the first tank (12) to the third tank (16) via a second fluid passageway (34), and further comprising; a third fluid passageway (40) extending between the third tank (16) and the second tank (14), the third fluid passageway (40) comprising a flow control means and a second turbine-generator assembly (42) configured to generate a second output power as water flows from the third tank (16) to the second tank (14), the second output power being controllable by actuation of the flow control means.

3. A tidal power generation and storage system (10) as claimed in claim 2, wherein the water level (36) in the third tank (16) is maintained at a higher level than the water (24) in the first tank (12).

4. A tidal power generation and storage system (10) as claimed in claim 1, comprising three tanks (12, 14, 16) located in a tidal sea (18), a first (12) and second (14) one of the tanks each comprising a selectively openable and closeable sea aperture (22, 54) in fluid communication with the sea (18), the system (10) being configured such that: the first tank's sea aperture (22) is openable on a flood tide to substantially fill the first tank (12) with seawater to a level corresponding to a high tide level (20); and the second tank's sea aperture (54) is openable on an ebb tide to substantially empty the second tank (14) of seawater to a level corresponding with a low tide level (20), the system (10) being **characterised by**: a first fluid passageway (26) extending between the first tank (12) and the second tank (14), the first fluid passageway (26) comprising a first turbine-generator assembly (30) configured to generate a first power as water flows from the first tank (12) to the second tank (14), the first power being used to drive a pump (32) for pumping water from the third tank (16) to the second tank (14) via a second fluid passageway (34), and further comprising; a third fluid passageway (40) extending between the first tank (12) and the third tank (16), the third fluid passageway (40) comprising a flow control means and a second turbine-generator assembly (43) configured to generate a second output power as water flows from the first tank (12) to the third tank (16), the second output power being controllable by actuation of the flow control means.

5. A tidal power generation and storage system (10) as claimed in any of claims 2, 3 or 4 wherein the water level (24) in the first tank (12) is maintained at a higher level than the water (28) in the second tank (14).

6. A tidal power generation and storage system (10) as claimed in claim 4 or claim 5, wherein the water level (28) in the second tank (14) is maintained at a higher level than the water (36) in the third tank (16).

7. A tidal power generation and storage system (10) as claimed in any preceding claim, wherein a head between the water levels in the first pair of tanks (12, 14) is used to continuously drive the first turbine-generator assembly (30) for pumping water to maintain a second head between the water levels in the third pair of tanks (16, 14), the second head providing a source of potential energy for generation of output power (49) on demand.

8. A tidal power generation and storage system (10) as claimed in any preceding claim, further comprising any one or more of the group comprising: means for restricting the flow of water between the first pair of tanks (12, 14); the openable sea apertures (22, 54) comprising sluice gates; and means for feeding the output power (49) to a power distribution network (46).

9. A tidal power generation and storage system (10) as claimed in any preceding claim, wherein the tanks (12, 14, 16) each have a cross-sectional area exceeding any one or more of the group comprising: one hundred square metres; one thousand square metres; and one square kilometre.

10. A tidal power generation and storage system (10) as claimed in any preceding claim, further comprising a supplementary renewable energy source (47) adapted to pump (50) water between the second pair of tanks (12, 16) the supplementary renewable energy source (47) comprising any one or more of the group comprising: a tidal current turbine; a wave turbine; a wind turbine (47); a wind-powered pump (47); a photovoltaic cell; and a solar panel.

11. A tidal power generation and storage system (10) as claimed in claim 9 or claim 10, wherein the supplementary renewable energy source (47) is operatively connected to drive a third pump (50) to pump seawater between the second pair of tanks, or comprises a wind turbine (47) whose output shaft is mechanically connected to the drive shaft of a pump (50).

12. The tidal power generation and storage system (10) of claim 2, adapted for operation in tidal waters (18) in which the mean sea level (20) is between 5 and 20 metres above the sea bed (56).

13. The tidal power generation and storage system (10) as claimed in claim 4, adapted for operation in tidal waters (18) in which the mean sea level (20) is greater than 20 metres above the sea bed (56).

14. An offshore power generation and storage plant (80) according to any preceding claim comprising a generally cylindrical main body portion (82) manufactured from concrete sea walls defining an island in the tidal sea (18), the main body (82) comprising internal dividing walls (88) defining the first (12), second (14) and third tanks (16) internally within the main body portion (82), such that each of the said three tanks (12, 14, 16) shares a dividing wall (88) with the remaining two tanks, and wherein the conduits and turbines (42, 44) are located in the dividing walls (88) to allow sea water to flow between the tanks (12, 14, 16) by passing therethrough.

15. An offshore power generation and storage plant (80) as claimed in claim 14, wherein the exterior of the plant (80) comprises any one or more of the group comprising: a wind farm comprising a number of wind turbines (47); an accommodation unit (84); a heliport (86); a docking facility; a storage facility; an offshore warehouse; a shipping depot; a LNG import terminal; and an oil depot.

## Patentansprüche

1. Ein System (10) zur Erzeugung und Speicherung von Gezeitenstrom, das drei Tanks (12, 14, 16) umfasst, die sich in einem Gezeitenmeer (18) befinden, wobei ein erstes Paar der Tanks (12, 14) jeweils eine selektiv sich öffnen und schließen lassende Öffnung (22, 45) zum Meer in Flüssigkeitsverbindung mit dem Meer (18) umfasst, wobei das System (10) derart konfiguriert ist, dass: Eine erste Öffnung (22) zum Meer des ersten Tanks des Paares von Tanks bei Flut öffenbar ist, um ihn mit Meerwasser auf einen Pegel (24) zu füllen, der im Wesentlichen einem Flutpegel (20) entspricht; und eine zweite Öffnung (54) zum Meer des ersten Tanks des Paares von Tanks bei Ebbe öffenbar ist, um das Meerwasser aus ihm im Wesentlichen auf einen Pegel zu entleeren, der einer Ebbe (20) entspricht, wobei das System (10) **gekennzeichnet ist durch**: Einen ersten Flüssigkeitsdurchgang (26), der sich zwischen dem ersten Paar von Tanks (12, 14) erstreckt, wobei der erste Flüssigkeitsdurchgang (26) eine erste Turbinen-Generatoranordnung (30) umfasst, die konfiguriert ist, einen ersten Strom zu erzeugen sowie Wasser zwischen den Tanks des ersten Paares von Tanks (12, 14) fließt, wobei der erste Strom zum Antrieb einer Pumpe (32) verwendet wird, um Wasser zwischen einem zweiten Paar (12, 16) der drei Tanks über einen zweiten Flüssigkeitsdurchgang (34) zu pumpen, wobei das zweite Paar (12, 16) ein anderes Paar von Tanks als das erste Paar von Tanks (12, 14) ist; wobei sich ein dritter Flüssigkeitsdurchgang (40) zwischen einem dritten Paar von Tanks (16, 14) erstreckt, wobei das dritte Paar (16,14) ein anderes Paar von Tanks als die ersten zwei Paare von Tanks (12, 14; 12, 16) ist, wobei der dritte Flüssigkeitsdurchgang (40) ein Durchflussregelmittel und eine zweite Turbinen-Generatoranordnung (42) umfasst, die konfiguriert ist, einen zweiten Ausgangsstrom (49) zu erzeugen sowie Wasser zwischen dem dritten Paar von Tanks (16, 14) fließt, wobei der zweite Ausgangsstrom (49) **durch** Betätigung des Durchflussregelmittels steuerbar ist.

2. Ein System (10) zur Erzeugung und Speicherung von Gezeitenstrom wie in Anspruch 1 beansprucht, das drei Tanks (12, 14, 16) umfasst, die sich in einem Gezeitenmeer (18) befinden, wobei ein erster (12) und zweiter (14) der Tanks jeweils eine selektiv sich öffnen und schließen lassende Öffnung (22, 54) zum Meer in Flüssigkeitsverbindung mit dem Meer (18) umfasst, wobei das System (10) derart konfiguriert ist, dass: Eine erste Öffnung (22) zum Meer des ersten Tanks bei Flut öffenbar ist, um den ersten Tank (12) mit Meerwasser auf einen Pegel zu füllen, der im Wesentlichen einem Flutpegel (20) entspricht; und eine zweite Öffnung (54) zum Meer des zweiten Tanks bei Ebbe öffenbar ist, um das Meerwasser aus dem zweiten Tank (14) im Wesentlichen auf einen Pegel zu entleeren, der einem Pegel (20) bei Ebbe entspricht, wobei das System (10) **gekennzeichnet ist durch**: Einen ersten Flüssigkeitsdurchgang (26), der sich zwischen dem Tank (12) und dem zweiten Tank (14) erstreckt, wobei der erste Flüssigkeitsdurchgang (26) eine erste Turbinen-Generatoranordnung (30) umfasst, die konfiguriert ist, einen ersten Strom zu erzeugen sowie Wasser vom ersten Tank (12) zum zweiten Tank (14) fließt, wobei der erste Strom zum Antrieb einer Pumpe (32) verwendet wird, um Wasser aus dem Tank (12) zum dritten Tank (16) über einen zweiten Flüssigkeitsdurchgang (34) zu pumpen, und ferner umfassend; einen dritten Flüssigkeitsdurchgang (40), der sich zwischen dem dritten Tank (16) und dem zweiten Tank (14) erstreckt, wobei der dritte Flüssigkeitsdurchgang (40) ein Durchflussregelmittel und eine zweite Turbinen-Generatoranordnung (42) umfasst, die konfiguriert ist, einen zweiten Ausgangsstrom zu erzeugen sowie Wasser aus dem dritten Tank (16) zum zweiten Tank (14) fließt, wobei der zweite Ausgangsstrom **durch** Betätigung des Durchflussregelmittels steuerbar ist.

3. Ein System (10) zur Erzeugung und Speicherung von Gezeitenstrom wie in Anspruch 2 beansprucht, wobei der Wasserpegel (36) im dritten Tank (16) auf einem höheren Pegel als das Wasser (24) im ersten Tank (12) beibehalten wird.

4. Ein System (10) zur Erzeugung und Speicherung von Gezeitenstrom wie in Anspruch 1 beansprucht, das drei Tanks (12, 14, 16) umfasst, die sich in einem Gezeitenmeer (18) befinden, wobei ein erster (12) und zweiter (14) der Tanks jeweils eine selektiv sich öffnen und schließen lassende Öffnung (22, 54) zum Meer in Flüssigkeitsverbindung mit dem Meer (18) umfasst, wobei das System (10) derart konfiguriert ist, dass: Eine erste Öffnung (22) zum Meer des ersten Tanks bei Flut öffenbar ist, um im Wesentlichen den ersten Tank (12) mit Meerwasser auf einen Pegel zu füllen, der einem Flutpegel (20) entspricht; und eine zweite Öffnung (54) zum Meer des zweiten Tanks bei Ebbe öffenbar ist, um das Meerwasser aus dem zweiten Tank (14) im Wesentlichen auf einen Pegel zu entleeren, der einem Pegel (20) bei Ebbe entspricht, wobei das System (10) **gekennzeichnet ist durch**: Einen ersten Flüssigkeitsdurchgang (26), der sich zwischen dem ersten Tank (12) und dem zweiten Tank (14) erstreckt, wobei der erste Flüssigkeitsdurchgang (26) eine erste Turbinen-Generatoranordnung (30) umfasst, die konfiguriert ist, einen ersten Strom zu erzeugen sowie Wasser vom ersten Tank (12) zum zweiten Tank (14) fließt, wobei der erste Strom zum Antrieb einer Pumpe (32) verwendet wird, um Wasser aus dem dritten Tank (16) zum zweiten Tank (14) über einen zweiten Flüssigkeitsdurchgang (34) zu pumpen, und ferner umfassend; einen dritten Flüssigkeitsdurchgang (40), der sich zwischen dem ersten Tank (12) und dem dritten Tank (16) erstreckt, wobei der dritte Flüssigkeitsdurchgang (40) ein Durchflussregelmittel und eine zweite Turbinen-Generatoranordnung (43) umfasst, die konfiguriert ist, einen zweiten Ausgangsstrom zu erzeugen sowie Wasser aus dem ersten Tank (12) zum dritten Tank (16) fließt, wobei der zweite Ausgangsstrom **durch** Betätigung des Durchflussregelmittels steuerbar ist.

5. Ein System (10) zur Erzeugung und Speicherung von Gezeitenstrom wie in Anspruch 2, 3 oder 4 beansprucht, wobei der Wasserpegel (24) im ersten Tank (12) auf einem höheren Pegel als das Wasser (28) im zweiten Tank (14) beibehalten wird.

6. Ein System (10) zur Erzeugung und Speicherung von Gezeitenstrom wie in Anspruch 4 oder Anspruch 5 beansprucht, wobei der Wasserpegel (28) im zweiten Tank (14) auf einem höheren Pegel als das Wasser (36) im dritten Tank (16) beibehalten wird.

7. Ein System (10) zur Erzeugung und Speicherung von Gezeitenstrom wie in einem vorhergehenden Anspruch beansprucht, wobei eine Säule zwischen den Wasserpegeln im ersten Paar von Tanks (12, 14) verwendet wird, um die erste Turbinen-Generatoranordnung (30) kontinuierlich anzutreiben, um eine zweite Säule zwischen den Wasserpegeln im dritten Paar von Tanks (16, 14) beizubehalten, wobei die zweite Säule eine Quelle möglicher Energie zur Erzeugung des zweiten Ausgangsstroms (49) bei Bedarf bereitzustellen.

8. Ein System (10) zur Erzeugung und Speicherung von Gezeitenstrom wie in einem vorhergehenden Anspruch beansprucht, das ferner irgendeines oder mehrere aus der Gruppe umfasst, die umfasst: Mittel zur Begrenzung des Wasserflusses zwischen dem ersten Paar von Tanks (12, 14); die öffenbaren Öffnungen (22, 54) zum Meer, die Schleusentore umfassen; und Mittel zum Speisen des Ausgangsstroms (49) zu einem Stromverteilungsnetz (46).

9. Ein System (10) zur Erzeugung und Speicherung von Gezeitenstrom wie in einem vorhergehenden Anspruch beansprucht, wobei die Tanks (12, 14, 16) jeweils eine Querschnittsfläche aufweisen, die irgendeine oder mehrere der Gruppe überschreiten, die umfasst: einhundert Quadratmeter; eintausend Quadratmeter; und einen Quadratkilometer.

10. Ein System (10) zur Erzeugung und Speicherung von Gezeitenstrom wie in einem vorhergehenden Anspruch beansprucht, das ferner eine ergänzende erneuerbare Energiequelle (47) umfasst, die angepasst ist, Wasser zwischen dem zweiten Paar von Tanks (12, 16) zu pumpen (50), wobei die ergänzende Energiequelle (47) irgendeines oder mehrere aus der Gruppe umfasst, die umfasst: Eine Gezeitenstromturbine; eine Wellenturbine; eine Windturbine (47); eine windgetriebene Pumpe (47); eine Solarzelle; und ein Solarpaneel.

11. Ein System (10) zur Erzeugung und Speicherung von Gezeitenstrom wie in Anspruch 9 oder Anspruch 10 beansprucht, wobei die ergänzende erneuerbare Energiequelle (47) betriebsfähig angeschlossen ist, eine dritte Pumpe (50) anzutreiben, um Meerwasser zwischen dem zweiten Paar von Tanks zu pumpen oder eine Windturbine (47) umfasst, deren Ausgangswelle mechanisch mit der Antriebswelle einer Pumpe (50) verbunden ist.

12. Ein System (10) zur Erzeugung und Speicherung von Gezeitenstrom nach Anspruch 2, das zum Betrieb in Gezeitengewässern (18) angepasst ist, in denen der mittlere Meeresspiegel (20) zwischen 5 und 20 Metern über dem Meeresboden (56) liegt.

13. Ein System (10) zur Erzeugung und Speicherung von Gezeitenstrom wie in Anspruch 4 beansprucht, das zum Betrieb in Gezeitengewässern (18) angepasst ist, in denen der mittlere Meeresspiegel (20) größer als 20 Meter über dem Meeresboden (56) liegt.

14. Eine Offshore-Anlage (80) zur Stromerzeugung und -speicherung gemäß einem vorhergehenden Anspruch, die einen generell zylindrischen Hauptkörperteil (82) umfasst, der aus Seewänden aus Beton hergestellt ist, die eine Insel im Gezeitenmeer (18) definieren, wobei der Hauptkörper (82) innere Trennwände (88) umfasst, welche die ersten (12), zweiten (14) und dritten Tanks (16) intern innerhalb des Hauptkörpers (82) definieren, derart, dass sich jeder der drei Tanks (12, 14, 16) eine Trennwand (88) mit den restlichen zwei Tanks teilt, und wobei sich die Leitungen und Turbinen (42, 44) in den Trennwänden (88) befinden, um dem Meerwasser zu erlauben zwischen den Tanks (12, 14, 16) zu fließen, indem dort hindurch fließt.

15. Eine Offshore-Anlage (80) zur Stromerzeugung und -speicherung wie in Anspruch 14 beansprucht, wobei die Außenseite der Anlage (80) irgendeins oder mehrere aus der Gruppe umfasst, die umfasst: Einen Windpark, der eine Anzahl von Windturbinen (47) umfasst; eine Wohneinheit (84); einen Heliport (86); eine Dockingeinrichtung; eine Speichereinrichtung; ein Offshore-Lagerhaus; ein Verladedepot; ein LNG-Importterminal; und ein Öldepot.

## Revendications

1. La présente invention concerne un système de génération et de stockage d'énergie marémotrice (10), comprenant trois réservoirs (12, 14, 16) situés dans une mer soumise aux marées (18), une première paire de réservoirs (12, 14) comprenant chacun une ouverture donnant sur la mer (22, 45), pouvant être ouverte et fermée de façon sélective, étant en communication fluidique avec la mer (18), le système (10) étant configuré de façon à ce que : une première ouverture donnant sur la mer (22) de la première paire de réservoirs puisse être ouverte lors d'une marée montante de façon à le remplir d'eau de mer jusqu'à un niveau (24) correspondant substantiellement à un niveau de marée haute (20) ; et une seconde ouverture donnant sur la mer (54) de la première paire de réservoirs puisse être ouverte durant une marée descendante de façon à le vider substantiellement de l'eau de mer jusqu'à atteindre un niveau correspondant au niveau d'une marée basse (20), le système (10) étant **caractérisé en ce que** : un premier passage pour fluides (26) s'étend entre la première paire de réservoirs (12, 14), le premier passage pour fluides (26) comprenant un premier ensemble de turbogénératrice (30) configuré de façon à générer une première puissance lorsque l'eau s'écoule entre les réservoirs de la première paire de réservoirs (12, 14), la première puissance servant à entraîner une pompe (32) de pompage de l'eau entre une seconde paire (12, 16) des trois réservoirs via un deuxième passage pour fluide (34), la seconde paire (12, 16) étant une paire de réservoirs différente de la première paire de réservoirs (12, 14) ; un troisième passage pour fluides (40) s'étend entre une troisième paire de réservoirs (16, 14), la troisième paire de réservoirs (16, 14) étant une paire de réservoirs différente des deux premières paires de réservoirs (12, 14 ; 12, 16), le troisième passage pour fluides (40) comprenant un moyen de régulation du flux et un second ensemble de turbogénératrice (42) configuré de façon à générer une seconde puissance de sortie (49) lorsque l'eau s'écoule entre la troisième paire de réservoirs (16,14), la seconde puissance de sortie (49) pouvant être contrôlée en actionnant le moyen de régulation du flux.

2. Un système de génération et de stockage d'énergie marémotrice (10) selon la revendication 1, comprenant trois réservoirs (12, 14, 16) situés dans une mer soumise aux marées (18), un premier (12) et un second (14) réservoir comprenant chacun une ouverture donnant sur la mer (22, 54), pouvant être ouverte et fermée de façon sélective, étant en communication fluidique avec la mer (18), le système (10) étant configuré de façon à ce que : l'ouverture donnant sur la mer (22) du premier réservoir puisse être ouverte lors d'une marée montante de façon à remplir le premier réservoir (12) d'eau de mer jusqu'à un niveau correspondant substantiellement à un niveau de marée haute (20) ; et l'ouverture donnant sur la mer (54) du second réservoir puisse être ouverte durant une marée descendante de façon à vider substantiellement le second réservoir (14) de l'eau de mer jusqu'à atteindre un niveau correspondant à un niveau de marée basse (20), le système (10) étant **caractérisé en ce que** : un premier passage pour fluides (26) s'étend entre le premier réservoir (12) et le second réservoir (14), le premier passage pour fluides (26) comprenant un ensemble de turbogénératrice (30) configuré de façon à générer une première puissance lorsque l'eau s'écoule du premier réservoir (12) au second réservoir (14), la première puissance servant à entraîner une pompe (32) de pompage de l'eau du premier réservoir (12) au troisième réservoir (16) via un second passage pour fluides (34) ; et **en ce qu'**il comprend par ailleurs un troisième passage pour fluides (40) s'étendant entre le troisième réservoir (16) et le second réservoir (14), le troisième passage pour fluides (40) comprenant un moyen de régulation du flux et un second ensemble de turbogénératrice (42) configuré de façon à générer une seconde puissance de sortie lorsque l'eau s'écoule du troisième réservoir (16) au second réservoir (14), la seconde puissance de sortie pouvant être contrôlée en actionnant le moyen de régulation du flux.

3. Un système de génération et de stockage d'énergie marémotrice (10) selon la revendication 2, dans lequel le niveau d'eau (36) dans le troisième réservoir (16) est maintenu à un niveau supérieur à celui de l'eau (24) dans le premier réservoir (12).

4. Un système de génération et de stockage d'énergie marémotrice (10) selon la revendication 1, comprenant trois réservoirs (12, 14, 16) situés dans une mer soumise aux marées (18), un premier (12) et un second (14) réservoir comprenant chacun une ouverture donnant sur la mer (22, 54), pouvant être ouverte et fermée de façon sélective, étant en communication fluidique avec la mer (18), le système (10) étant configuré de façon à ce que : l'ouverture donnant sur la mer (22) du premier réservoir puisse être ouverte lors d'une marée montante de façon à remplir substantiellement le premier réservoir (12) d'eau de mer jusqu'à un niveau correspondant à un niveau de marée haute (20) ; et l'ouverture donnant sur la mer (54) du second réservoir puisse être ouverte durant une marée descendante de façon à vider substantiellement le second réservoir (14) de l'eau de mer jusqu'à atteindre un niveau correspondant à un niveau de marée basse (20), le système (10) étant **caractérisé en ce que** : un premier passage pour fluides (26) s'étend entre le premier réservoir (12) et le second réservoir (14), le premier passage pour fluides (26) comprenant un ensemble de turbogénératrice (30) configuré de façon à générer une première puissance lorsque l'eau s'écoule du premier réservoir (12) au second réservoir (14), la première puissance servant à entraîner une pompe (32) de pompage de l'eau du troisième réservoir (16) au second réservoir (14) via un second passage pour fluides (34) ; et **en ce qu'**il comprend par ailleurs un troisième passage pour fluides (40) s'étendant entre le premier réservoir (12) et le troisième réservoir (16), le troisième passage pour fluides (40) comprenant un moyen de régulation du flux et un second ensemble de turbogénératrice (43) configuré de façon à générer une seconde puissance de sortie lorsque l'eau s'écoule du premier réservoir (12) au troisième réservoir (16), la seconde puissance de sortie pouvant être contrôlée en actionnant le moyen de régulation du flux.

5. Un système de génération et de stockage d'énergie marémotrice (10) selon l'une des revendications 2, 3 ou 4, dans lequel le niveau d'eau (24) dans le premier réservoir (12) est maintenu à un niveau supérieur à celui de l'eau (28) dans le second réservoir (14).

6. Un système de génération et de stockage d'énergie marémotrice (10) selon la revendication 4 ou 5, dans lequel le niveau d'eau (28) dans le second réservoir (14) est maintenu à un niveau supérieur à celui de l'eau (36) dans le troisième réservoir (16).

7. Un système de génération et de stockage d'énergie marémotrice (10) selon l'une des revendications précédentes, dans lequel une charge d'eau entre les niveaux d'eau dans la première paire de réservoirs (12, 14) sert à entraîner de façon continue le premier ensemble de turbogénératrice (30) pour pomper l'eau de façon à maintenir une seconde charge entre les niveaux d'eau dans la troisième paire de réservoirs (16, 14), la seconde charge fournissant une source d'énergie potentielle de fourniture d'une puissance de sortie (49) à la demande.

8. Un système de génération et de stockage d'énergie marémotrice (10) selon l'une des revendications précédentes, comprenant par ailleurs l'un des groupes ou plusieurs d'entre eux comprenant : des moyens de restriction du flux d'eau entre la première paire de réservoirs (12, 14) ; des ouvertures donnant sur la mer (22, 54) pouvant être ouvertes et comprenant des vannes d'écluse ; et des moyens de transmission de la puissance de sortie (49) à un réseau de distribution d'électricité (46).

9. Un système de génération et de stockage d'énergie marémotrice (10) selon l'une des revendications précédentes, dans lequel les réservoirs (12, 14, 16) disposent chacun d'une surface transversale dépassant une ou plusieurs valeurs du groupe comprenant : cent mètres carrés ; mille mètres carrés ; et un kilomètre carré.

10. Un système de génération et de stockage d'énergie marémotrice (10) selon l'une des revendications précédentes, comprenant par ailleurs une source d'énergie renouvelable complémentaire (47) adaptée de façon à pomper (50) de l'eau entre la seconde paire de réservoirs (12, 16), la source d'énergie renouvelable complémentaire (47) comprenant un ou plusieurs des groupes comprenant : une hydrolienne ; une turbine à houle ; une éolienne (47) ; une pompe éolienne (47) ; une cellule photovoltaïque ; une panneau solaire.

11. Un système de génération et de stockage d'énergie marémotrice (10) selon la revendication 9 ou la revendication 10, dans lequel la source d'énergie renouvelable complémentaire (47) est connectée fonctionnellement de façon à entraîner une troisième pompe (50) pour pomper l'eau de mer entre la seconde paire de réservoirs, ou comprend une éolienne (47) dont l'arbre de sortie est connecté mécaniquement à l'arbre d'entraînement d'une pompe (50).

12. Le système de génération et de stockage d'énergie marémotrice (10) selon la revendication 2, adapté pour un fonctionnement dans des eaux soumises aux marées (18) dans lesquelles le niveau moyen de la mer (20) est compris entre 5 et 20 mètres au-dessus du fond de la mer (56).

13. Le système de génération et de stockage d'énergie marémotrice (10) selon la revendication 4, adapté pour un fonctionnement dans des eaux soumises aux marées (18) dans lesquelles le niveau moyen de la mer (20) est supérieur à 20 mètres au-dessus du fond de la mer (56).

14. Une centrale de génération et de stockage d'énergie (80) en mer selon l'une des revendications précédentes, comprenant une partie de corps principal généralement cylindrique (82) fabriquée à partir de digues en béton définissant une île dans la mer soumise aux marées (18), le corps principal (82) comprenant des parois de séparation internes (88) définissant le premier (12), le second (14) et le troisième (16) réservoir de façon interne dans la partie du corps principal (82), de façon à ce que chacun desdits trois réservoirs (12, 14, 16) partage une paroi de séparation (88) avec les deux autres réservoirs, et dans lequel les conduits et les turbines (42, 44) sont situés dans les parois de séparation (88) de façon à permettre à l'eau de mer de s'écouler entre les réservoirs (12, 14, 16) en passant dans ces dernières.

15. Une centrale de génération et de stockage d'énergie (80) en mer selon la revendication 14, dans laquelle l'extérieur de la centrale (80) comprend l'un des groupes ou plusieurs d'entre eux comprenant : un parc d'éoliennes comprenant un certain nombre d'éoliennes (47) ; une unité d'hébergement (84) ; un héliport (86) ; une installation d'accostage ; une installation de stockage ; un entrepôt en mer; un entrepôt d'expédition ; un terminal d'importation de GNL; et un dépôt de carburant.
